(19)

Europäisches
Patentamt
European
Patent Office
Office européen
des brevets

(11) **EP 3 339 372 A1**

(12) **EUROPEAN PATENT APPLICATION**

(43) Date of publication:
**27.06.2018 Bulletin 2018/26**

(51) Int Cl.:
***C08L 67/04*** *(2006.01)*

(21) Application number: **16206074.3**

(22) Date of filing: **22.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Solvay SA
1120 Brussels (BE)**

(72) Inventors:
• **DEWAEL, Pascal
7133 BUVRINNES (BE)**

• **MARCHAND, Dominique
4671 Save (BE)**
• **VANDERVEKEN, Yves
3001 Heverlee (BE)**
• **LEO, Vito
1315 Glimes (BE)**

(74) Representative: **Benvenuti, Federica
Solvay S.A.
Département de la Propriété Intellectuelle
Rue de Ransbeek, 310
1120 Bruxelles (BE)**

(54) **GLYCOLIC ACID POLYMER COMPOSITION**

(57)     The invention pertains to a polyglycolic acid composition including at least one branched polyglycolic acid polymer including recurring units derived from polyfunctional monomers and at least one linear polyglycolic acid polymer, which possesses an improved rheological behaviour rendering the same suitable for being processed in co-extrusion and co-injection molding techniques in combination with standard thermoplasts, e.g. PET.

EP 3 339 372 A1

**Description**

**Technical Field**

The present invention pertains to a novel glycolic acid polymer composition, to a method of making the same, and to a method of making a multi-layer container using the same.

**Background Art**

Today, multi-layer plastic containers mainly made of polyester such as polyethylene terephthalate (PET) and comprising a barrier layer conferring low gas permeability are widely used for beverages, such as tea, fruit juices, carbonated beverages, sodas, and the like. More recently, increased demand for so-called "small" plastic container (e.g. volumes ranging from 150 to 500 ml) is observed: Such reduction in container size necessarily leads to an increase of exposed surface area per unit volume. Hence, as the plastic container becomes smaller in size, the shelf life of contents would become shorter, unless improvements in barrier properties delivered by modifications in the size or the nature of the barrier layer are called for compensating the un-permeability loss. While increase in the thickness of the barrier layer could provide a solution, cost consideration generally drives in the opposite direction, i.e. for a reduction in the thickness of the same. Further, in recent years, plastic containers have been proposed for packaging more "demanding" beverages, such as beer, which is a beverage well known for being affected by oxygen and light, and for which $CO_2$ un-permeability is a must. Accordingly, there is a general demand in the market for additional improvement in gas barrier property of the plastic container. Further, in addition, in the packaging domain, a continuous quest for solutions ensuring recyclability of components' materials and/or biodegradability of the same exists.

In order to deal with all the above-mentioned demands, multi-layer containers combining a thermoplastic polyester resin such as PET as a resin for forming each of an innermost layer and an outermost layer and using a bio-sourced and bio-degradable polyglycolic acid (co)polymers (PGA) barrier layer have been considered.

Generally speaking, techniques used for the manufacture of multi-layer containers mainly made of a polyester resin and including an inner layer of PGA resin, comprise injection or extrusion molding from molten state those two resins simultaneously through a die to fill a mold cavity, molding a preform (parison) structure having at least three layers, and further subjecting the resultant preform to biaxial stretch blow molding so as to obtain the multi-layer container.

Nevertheless, for the above mentioned injection molding step to provide a suitable preform, arranging a thin layer of PGA as barrier layer in a homogeneous manner between two layers of polyester resin, it is important both that there's a match in the viscosity of the two resins, but also in the elastic recovery of the same.

Notably, US 6673403 (KUREHA KAGAKU KOGYO K.K.) 06.01.2004 pertains to a process for producing a multi-layer hollow container, which comprises respectively heating and melting polyglycolic acid containing at least 60 weight percent of a repeating unit -[-O-CH$_2$-C(O)-]-, at least one thermoplastic resin, and optionally an adhesive in extruders, causing the respective resins to flow into a die for forming a multi-layer parison to put them together, extruding the joined resins into a multi-layer tubular parison, holding the parison by a split mold before it is solidified, pinching one end of the parison, and at the same time blowing up the parison up to the mold wall by introducing air into the parison, and then cooling the blown parison, thereby molding the container.

Similarly, US 7998385 (KUREHA CORPORATION) 16.08.2011 provides a process for producing a multilayer stretched product, e.g. a bottle, comprising: forming a resin laminate including at least one layer of polyglycolic acid resin and a layer of another thermoplast, e.g. PET, by co-extrusion or co-injection under the form of a pre-form, and cooling the same, and stretching and blowing the said pre-form, once re-heated, to provide a hollow container.

Indeed, applicant has found that technique above detailed, for the manufacture of multi-layer assemblies, would require, from one side, for the co-injected or co-extruded PGA material to possess a dynamic viscosity, when determined at a shear rate at about 10 sec$^{-1}$ (which significantly correspond to the shear which a resin to be co-extruded in inner layer in amount of 1-10 % wt will be exposed) consistent with the viscosity of the polyester resin, and from the other side, for the same co-injected or co-extruded PGA material to possess a matching tanδ at same shear rate, where tanδ is the ratio between the viscous modulus and the elastic modulus at same shear rate.

The applicant has found that failure to comply with these viscous and elastic rheological behaviour match requirements between the polyester resin and the PGA resin lead to flow instability phenomena which create unacceptable defects in the barrier layer, and hence provide for containers of unsuitable permeability performances, especially when targeting ever thinner barrier layers.

While techniques providing linear PGA consisting essentially of recurring units -[CH$_2$-C(O)-O]- by polycondensation of cyclic glycolide, manufacture of PGA copolymers from direct polycondensation of glycolic acid, in the presence of additional modifying/branching monomers has been proposed as an economical and efficient alternative, providing high molecular weight PGA having advantageous rheological behaviour.

In this area, US 2012027973 (SOLVAY S.A.) 02.02.2012 discloses a process for manufacturing a polymer by polycondensation of a hydroxy acid, said polymer comprising at least 80 % by weight of units that correspond to the hydroxy acid, according to which at least one polyfunctional reactant capable of giving rise to the formation of a three-dimensional polymer network is mixed with the hydroxy acid, and according to which the mixture is subjected to temperature and pressure conditions and for a duration which are all suitable for giving rise to the formation of the network. Among said polyfunctional reactants, mention is made of epoxy silanes, polyepoxides, and mixtures of at least one polyol and at least one polyacid, of which at least one of (preferably both) the polyol and the polyacid comprise(s) three functionalities.

Still, WO 2016/173640 (SOLVAY S.A.) 03.11.2016 pertains to a branched poly(hydroxyl acid) polymer obtained from polycondensation reaction of a monomer mixture comprising: (i) at least one hydroxyl acid having only one hydroxyl group and only one carboxylic acid group [hydroxyacid (A)]; (ii) at least one polyol comprising at least three hydroxyl groups and being free from carboxylic acid group [polyol (H)]; (iii) at least one polyacid comprising at least three carboxylic acid groups and being free from hydroxyl groups [polyacid (O)]; and (iv) at least one carboxylic acid having one or two carboxylic acid groups and being free from hydroxyl group [acid (C)], wherein the amount of said acid (C) is such that the number of carboxylic acid groups thereof is comprised between 0.0001 to 0.010 percent with respect to the number of hydroxyl groups of hydroxyacid (A).

Nevertheless, the applicant has found that the branched PGA provided by the prior art, as listed above, wherein a combination of three-functional branching agents is used, are characterized by a visco-elastic behaviour which render them unsuitable for being used in combination with standard PET resins for being processed via common techniques for making multi-layer containers. In particular, the Applicant has found that such branched PGA polymers are characterized by a peculiar relation between $\tan\delta$ (measured at a shear rate of 10 sec$^{-1}$ and at 260°C) and molten viscosity (equally measured at a shear rate of 10 sec$^{-1}$ and 260°C), with values of $\tan\delta$ decreasing from 2 to 1.3 for viscosities increasing from 400 to 800 Pa x sec, i.e. representative of a viscous/elastic compromise leading to significant elasticity in the molten state, hence generating melt flow instability in co-extrusion/co-injection molding, and possessing very high shear thinning (ration between viscosity at 100 sec$^{-1}$ and 1 sec$^{-1}$), which may be inconsistent with shear variations encountered in the different sections of melt processing machineries, in particular when PGA polymers are intended as inner layers.

Now, the applicant has found a glycolic acid polymer composition, which is able to match the above-mentioned rheological requirements, and which can be hence successfully used in combination with standard polyester resins for obtaining multi-layer containers having thin barrier layers.

## Summary of invention

The invention hereby pertains to a glycolic acid polymer composition [composition (M)] said composition (M) comprising:

- a branched polyglycolic acid polymer [polymer (b-PGA)], said branched polyglycolic acid polymer comprising units derived from polycondensation of:

  (i) glycolic acid (GA);
  (ii) optionally, at least one hydroxyl acid having only one hydroxyl group and only one carboxylic acid group different from GA [hydroxyacid (A)], wherein the molar amount of hydroxyacid (A) is of at most 5 % moles, with respect to the sum of moles of GA and hydroxyacid (A);
  (iii) at least one polyol comprising at least three hydroxyl groups and being free from carboxylic acid group [polyol (H)], wherein the amount of polyol (H) is such that the number of hydroxyl groups thereof is comprised between 0.050 to 0.750 % with respect to the overall number of hydroxyl groups of glycolic acid and of the hydroxyacid (A), if present;
  (iv) at least one polyacid comprising at least two carboxylic acid groups and being free from hydroxyl groups [polyacid (O)], wherein the amount of polyacid (O) is such that the number of carboxyl groups thereof is comprised between 0.050 to 0.750 % with respect to the overall number of hydroxyl groups of glycolic acid and of the hydroxyacid (A), if present; and
  (v) optionally, at least one carboxylic acid having one carboxylic acid group and being free from hydroxyl group [monoacid (C)], wherein the amount of said acid (C) is such that the number of carboxylic acid groups thereof is of less than 0.010 % with respect to the overall number of hydroxyl groups of glycolic acid and of the hydroxyacid (A), if present; and

- a linear polyglycolic acid polymer [polymer (I-PGA)], said linear polyglycolic acid polymer consisting essentially of recurring units derived from ring-opening-polymerization of glycolide, said polymer (I-PGA) being present in the composition (M) in an amount of at least 20 and at most 40 wt %, with respect to the combined weight of polymer (b-PGA) and polymer (l-PGA).

The Applicant has surprisingly found that composition (M) as above detailed, thanks to the simultaneous presence of linear and branched structures of PGA polymers in well-defined weight ratios, is able to deliver in melt viscosities range of from 400 to 800 Pa x sec, when measured according to ASTM D4440-08 at a shear rate of 10 sec$^{-1}$ and at a temperature of 260°C), a viscous/elastic compromise for matching standard thermoplasts (in particular polyesters) behaviour in co-extrusion/co-injection, as expressed by tan$\delta$ values of more than 1.5 in the mentioned melt viscosities' range, and measured as above detailed, and acceptable shear thinning, with values of ratio $\eta_{1 \text{ sec-1}}/\eta_{100}$ sec$^{-1}$ of less than 6.0, whereas: $\eta_1$ sec$^{-1}$ is the melt viscosity measured according to ASTM D4440-08 at a shear rate of 1 sec$^{-1}$ and at a temperature of 260°C; and $\eta_{100}$ sec$^{-1}$ is the melt viscosity measured according to ASTM D4440-08 at a shear rate of 100 sec$^{-1}$ and at a temperature of 260°C.

**Brief description of drawings**

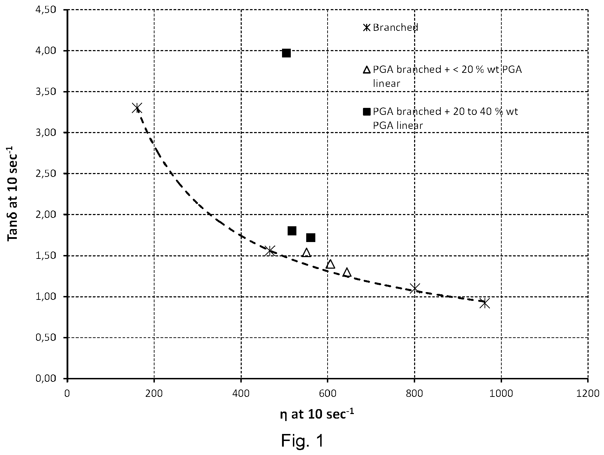

Figure 1 is a sketch of tan$\delta$ (measured according to ASTM D4440-08 at a shear rate of 10 sec$^{-1}$ and at a temperature of 260°C) as a function of $\eta$ (melt viscosity measured according to ASTM D4440-08 at a shear rate of 10 sec$^{-1}$ and at a temperature of 260°C) (i) for branched PGA of the prior art produced using tricarboallylic acid (TCA) (symbol : ✳ ), inclusive of trend-line; (ii) for mixture of branched PGA and linear PGA according to the invention (symbol: ■); and (iii) for mixtures of branched PGA and linear PGA of comparison (symbol: △).

**Description of embodiments**

**The polymer (b-PGA)**

The branched polyglycolic acid polymer [polymer (b-PGA)] comprises units derived from polycondensation of notably GA and optionally a hydroxyacid (A), as defined above. The choice of the said hydroxyacid (A) is not limited, and all hydroxyl acids capable of polycondensing, i.e. of forming a macromolecule by condensation (chain addition of monomers with removal of water) can be used. Examples thereof include lactic acid, 3-hydroxybutyric acid, 4-hydroxybutyric acid, 4-hydroxyvaleric acid, 5-hydroxyvaleric acid, 6-hydroxycaproic acid. In general, hydroxyacids (A) that have a primary alcohol are preferred as they are more reactive. With these regards, good results, in particular, can be obtained when the hydroxyacid (A) is lactic acid (LA) (L- or D- isomers, either in racemic mixture or as single isomer).

In one variant of the invention, both GA and the hydroxyacid (A), if present, are bio-sourced, that is to say derived from a natural and renewable raw material, as opposed to a fossil raw material. The use of bio-sourced PGA and, if applicable, hydroxyacids (A), allows the synthesis of "green" polymers, that is to say polymers synthesized from renewable raw material.

When present, the amount of hydroxyacid (A) is of at most 5 % moles, generally of at most 4 % moles, preferably at most 3 % moles; and/or said amount can be as low as 0.1 % moles with respect to the sum of moles of GA and hydroxyacid (A). It is generally understood that the amount of hydroxyacid (A) will be tuned so as to possibly confer certain advantages while not too seriously detrimentally affect the barrier performances which are proper to the PGA polymer structure.

Embodiment's where no additional hydroxyacid (A) is used, in combination with GA, are within the scope of the present invention, and may be preferred from the perspective of maximizing barrier performances.

The choice of polyol (H) is not particularly limited. Polyol (H) can be selected from the group consisting of:

- triols, in particularly selected from the group consisting of glycerol, trimethylolpropane, trimethylolbutane, 2,3-di(2'-hydroxyethyl)-cyclohexan-1-ol, hexane-1,2,6-triol, 1,1,1-tris(hydroxymethyl)ethane, 3-(2'-hydroxyethoxy)propane-1,2-diol, 3-(2'-hydroxypropoxy)-propane-1,2-diol, 2-(2'-hydroxyethoxy)-hexane-1,2-diol, 6-(2'hydroxypropoxy)-hexane-1,2-diol, 1,1,1-tris-[(2'-hydroxyethoxy)-methylethane, 1,1,1-tris-[(2'-hydroxypropoxy)-methyl-propane, 1,1,1-tris-(4'-hydroxyphenyl)ethane, 1,1,1-tris-(hydroxyphenyl)-propane, 1,1,5-tris-(hydroxyphenyl)-3-methylpentane, trimethylolpropane ethoxylate, trimethylolpropane propoxylate, tris(hydroxymethyl)aminomethane;
- tetraols, in particularly selected from the group consisting of diglycerol, di(trimethylolpropane), pentaerythritol, 1,1,4-tris-(dihydroxyphenyl)-butane;
- polyols comprising 5 hydroxyl groups, in particular triglycerol;
- polyols comprising 6 hydroxyl groups, in particular dipentaerythritol; and
- polyols comprising 8 hydroxyl groups, in particular tripentaerythritol.

Preferred polyols (H) are triols (in particular trimethylolpropane) and tetraols (in particular pentaerythritol), as above detailed, more particularly triols. A polyol (H) which has been found to provide particularly good results within the frame of the present invention is trimethylolpropane.

The polyol (H) is used in an amount such that the number of hydroxyl groups thereof is comprised of at least 0.050 %, preferably at least 0.100 %, more preferably at least 0.200 % and/or of at most 0.750 %, preferably of at most 0.650 %, more preferably at most 0.600 % with respect to the overall number of hydroxyl groups of glycolic acid and of the hydroxyacid (A), if present.

An amount of polyol (H) such that the number of hydroxyl groups thereof is of from 0.350 to 0.550 % with respect to the overall number of hydroxyl groups of glycolic acid and of the hydroxyacid (A), if present, has been found particularly useful according to the preferred embodiments of the present invention.

The polyacid (O) can comprise two carboxylic acid groups, three carboxylic acid groups or more than three carboxylic acid groups, e.g. four carboxylic acid groups. Polyacid (O) can be selected among polycarboxylic aliphatic acids, polycarboxylic cycloaliphatic acids and polycarboxylic aromatic acids.

Aliphatic dicarboxylic acid, cycloaliphatic dicarboxylic acids and aromatic dicarboxylic acid can be used as polyacids (O) having two carboxylic acid groups.

Specific aliphatic dicarboxylic acids include, for example, succinic acid, oxalic acid, malonic acid, glutaric acid, adipic acid, pimelic acid, suberic acid, azelaic acid, sebacic acid, undecanoic diacid and dodecanoic diacid, 3,3-dimethylpentane diacid.

Specific cycloaliphatic dicarboxylic acids include, for example, cyclohexanedicarboxylic acid such as hexahydroorthophthalic acid, hexahydrometaphthalic acid, hexahydroparaphthalic acid, and diacids having -COOH groups covalently bounded to a norbornylmethane backbone, a cyclohexylmethane backbone, a dicyclohexylmethane backbone, a dicyclohexylpropane backbone, a di(methylcyclohexyl) or di(methylcyclohexyl)propane backbone.

Aromatic dicarboxylic acids which can be used are notably phthalic acids, including isophthalic acid (IA), and terephthalic acid (TA), 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene, naphthalene dicarboxylic acids, including 2,6-naphthalene dicarboxylic acid, 2,7-naphthalene dicarboxylic acid, 1,4-naphthalene dicarboxylic acid, 2,3-naphthalene dicarboxylic acid, 1,8-naphthalene dicarboxylic acid.

Examples of polycarboxylic aliphatic acids comprising three or more than three carboxylic acid groups are:

- propane1,2,3-tricarboxylic acid (also known as tricarballylic acid);
- ethane-1,1,2,2 tetracarboxylic acid;
- butane-1,2,3,4 tetracarboxylic acid;
- pentane-1,2,4,5-tetracarboxylic acid.

Among them, propane1,2,3-tricarboxylic acid and butane-1,2,3,4 tetracarboxylic acid are preferred.

Examples of polycarboxylic cycloaliphatic acids comprising three or more than three carboxylic acid groups are:

- 1,2,3,4-cyclobutane tetracarboxylic acid;
- 2,2,6,6-tetra-(carboxyethyl)cyclohexanone;
- (+)-(18-crown-6)-2,3,11,12-tetracarboxylic acid;
- cyclopentane-1,2,3,4 tetracarboxylic acid;
- cyclohexane-1,2,4,5 tetracarboxylic acid;
- cyclohexane -2,3,5,6 tetracarboxylic acid;
- 3-ethylcyclohexane-1,2,4,5 tetracarboxylic acid;
- 1-methyl-3-ethyl cyclohexane-3-(1,2)5,6 tetracarboxylic acid;
- 1-ethyl cyclohexane-1-(1,2),3,4 tetracarboxylic acid;
- 1-propylcyclohexane-1-(2,3),3,4 tetracarboxylic acid;
- 1,3-dipropylcyclohexane-1-(2,3),3-(2,3) tetracarboxylic acid;
- dicyclohexyl-3,4,3',4' tetracarboxylic acid.

Examples of polycarboxylic aromatic acids comprising three or more than three carboxylic acid groups are:

- pyromellitic acid (1,2,4,5- benzene tetracarboxylic acid);
- trimesic acid (1,3,5-benzene tricarboxylic acid);
- trimellitic acid (1,3,4-benzene tricarboxylic acid);
- benzophenone-3,3',4,4'-tetracarboxylic acid;
- tetrahydrofuran-2,3,4,5-tetracarboxylic acid;

- 4,4'-(hexafluoroisopropylidene)diphthalic acid;
- 4,4'-oxydiphthalic acid anhydride;
- 4,4'-(4,4'-isopropylidenediphenoxy)bis(phthalic acid);
- 3,3',4,4'-biphenyl tetracarboxylic acid;
- 2,3,3',4-biphenyl tetracarboxylic acid;
- 2,2',3,3'-biphenyl tetracarboxylic acid;
- 1,2,5,6-naphthalene tetracarboxylic acid;
- 2,3,6,7-naphthalene tetracarboxylic acid;
- perylene-3,4,9,10 tetracarboxylic acid;
- propane 2,2-bis(3,4-dicarboxyphenyl) acid;
- ethane 1,1-bis(2,3-dicarboxyphenyl) acid;
- ethane 1,1-bis(3,4-dicarboxyphenyl) acid;
- phenanthrene-1,8,9,10-tetracarboxylic acid;
- tetrahydrofuran-2,3,4,5-tetracarboxylic acid;
- 3,3',4,4'-benzophenone tetracarboxylique acid;
- 2,2',3,3'-benzophenone tetracarboxylic acid;
- 2,3,5,6-pyridine tetracarboxylic acid;
- 3,3',4,4'-tetraphenylsilane tetracarboxylic acid;
- 2,2'-bis-(3,4-bicarboxyphenyl) hexafluoropropane tetracarboxylic acid;
- 2,2-bis(3,4-dicarboxyphenyl) sulfonic acid;
- 4,4'-(hexafluoroisopropylidene) diphthalic acid;
- 3,3',4,4'-diphenylsulfone tetracarboxylic acid;
- ethyleneglycol bistrimellitic acid;
- hydroquinone diphthalique acid;
- pyrazine-2,3,5,6-tetracarboxylic acid;
- thiophene-2,3,4,5-tetracarboxylic acid.

Polyacids (O) which have been found to provide particularly good results within the frame of the present invention are tricarballylic acid, 1,2,4,5-benzene tetracarboxylic acid and butane-1,2,3,4 tetracarboxylic acid, with tricarballylic acid being particularly preferred.

The polyacid (O) is used in an amount such that the number of carboxyl groups thereof is comprised of at least 0.050 %, preferably at least 0.100 %, more preferably at least 0.200 % and/or of at most 0.750 %, preferably of at most 0.650 %, more preferably at most 0.600 % with respect to the overall number of hydroxyl groups of GA and hydroxyacid (A), if present.

An amount of polyacid (O) such that the number of carboxyl groups thereof is of from 0.350 to 0.550 % with respect to the overall number of hydroxyl groups of GA and hydroxyacid (A), if present, has been found particularly useful according to the preferred embodiments of the present invention.

The choice of the monoacid (C) is not particularly limited; it is generally understood that better results are obtained with long chain acids, i.e. monoacids (C) wherein the total number of carbon atoms is at least 4, preferably at least 5 more preferably at least 6. Generally the monoacid (C) possesses from 4 to 36 carbon atoms, preferably from 6 to 24 carbon atoms.

The monoacid (C) may comprise unsaturated double bonds in its hydrocarbon chain; the monoacid (C) is nevertheless preferably an aliphatic acid, that is to say an acid of formula below:

$$R_{Hm}\text{-COOH} \qquad \text{(formula C-1)}$$

wherein $R_{Hm}$ is a monovalent aliphatic group having one or more than one carbon atom, in particular having 3 or more carbon atoms.

Among monoacids (C) of monoacid type which can be advantageously used in the process of the invention, mention can be notably made of caprylic acid [$CH_3(CH_2)_6COOH$], capric acid [$CH_3(CH_2)_8COOH$], undecanoic acid [$H_3C\text{-}(CH_2)_9\text{-COOH}$], dodecanoic or lauric acid [$H_3C\text{-}(CH_2)_{10}\text{-COOH}$], tridecanoic acid [$H_3C\text{-}(CH_2)_{11}\text{-COOH}$], tetradecanoic or myristic acid [$H_3C\text{-}(CH_2)_{12}\text{-COOH}$], pentadecanoic acid [$H_3C\text{-}(CH_2)_{13}\text{-COOH}$], hexadecanoic or palmitic acid [$H_3C\text{-}(CH_2)_{14}\text{-COOH}$], octadecanoic or stearic acid [$H_3C\text{-}(CH_2)_{16}\text{-COOH}$], arachidic acid [$H_3C\text{-}(CH_2)_{18}\text{-COOH}$], and behenic acid [$H_3C\text{-}(CH_2)_{20}\text{-COOH}$].

A monoacid (C) which has been show to provide particularly good results is stearic acid, which is hence particularly preferred

When present, the amount of monoacid (C) is such that the number of carboxylic acid groups thereof is comprised between 0.0001 to 0.010 % with respect to the overall number of hydroxyl groups of glycolic acid and hydroxyacid (A), if present. Preferably said amount is such that the number of carboxylic acid group of said monoacid (C) is of at least 0.0005 %, preferably at least 0.001 % with respect to the overall number of hydroxyl groups of glycolic acid and hydroxyacid (A), if present; and/or at most 0.010 %, preferably at most 0.008 %, most preferably at most 0.007 %, even more preferably at most 0.006 % with respect to the overall number of hydroxyl groups of glycolic acid and hydroxyacid (A), if present.

The polymer (b-PGA) is generally manufactured by a method of polycondensation, which typically includes a first step of polymerization in the molten state to form a pre-polymer and a second step of solid state polymerization (SSP) for increasing molecular weight of the pre-polymer and delivering the target polymer (b-PGA).

The polymer (b-PGA) generally possesses a melt viscosity ranging from 400 to 800 Pa x sec, when measured according to ASTM D4440-08 at a shear rate of 10 sec$^{-1}$ and at a temperature of 260°C. Preferred polymers (b-PGA) are those possessing a melt viscosity of at most 800 Pa x sec, preferably at most 750 Pa x sec, more preferably at least 700 Pa x sec.

Polymers (b-PGA) which have been found to possess particularly advantageous properties are those having melt viscosities of ranging from 500 to 700 Pa x sec, when measured according to ASTM D4440-08 at a shear rate of 10 sec$^{-1}$ and at a temperature of 260°C.

### The polymer (I-PGA)

The linear polyglycolic acid polymer [polymer (I-PGA)] essentially consists of recurring units derived from ring-opening-polymerization of glycolide. While end groups, defects or other impurities maybe present, it is understood that the polymer (I-PGA) is substantially free from units derived from a polyfunctional monomer possessing three or more than three functionalities able of polycondensing with hydroxyl and/or carboxyl groups of the GA.

Polymer (I-PGA) can be obtained by any method comprising heating glycolide (i.e. 1,4-dioxane-2,5-dione) to a sufficiently high temperature in the presence of an effective amount of catalyst (such as a cationic catalyst, e.g. a tin organic carboxylate, tin halide or antimony halide) to subject the glycolide to ring-opening polymerization. The said ring-opening polymerization is preferably conducted by a bulk polymerization process or solution polymerization process.

The polymer (I-PGA) generally possesses a melt viscosity ranging from 150 to 1000 Pa x sec, when measured according to ASTM D4440-08 at a shear rate of 10 sec$^{-1}$ and at a temperature of 260°C. Preferred polymers (I-PGA) are those possessing a melt viscosity of at most 950 Pa x sec, preferably at most 900 Pa x sec, more preferably at least 200 Pa x sec, even more preferably at least 250 Pa x sec.

Polymers (I-PGA) which have been found to possess particularly advantageous properties are those having melt viscosities of ranging from 300 to 850 Pa x sec, when measured according to ASTM D4440-08 at a shear rate of 10 sec$^{-1}$ and at a temperature of 260°C.

### The composition (M)

The composition (M) comprises polymer (b-PGA) and polymer (I-PGA), said polymer (I-PGA) being present in the composition (M) in an amount of at least 20 and at most 40 wt %, with respect to the combined weight of polymer (b-PGA) and polymer (I-PGA).

When the content of polymer (I-PGA) exceeds the claimed boundaries, the performances of composition (M) will be detrimentally affected, in that the resulting tan$\delta$ values tend to increase, which imply that the rhoelogical behaviour will mainly mimic the one of the polymer (I-PGA), with significant loss of processability. On the other side, when the content of polymer (I-PGA) is below the claimed boundaries, its presence is ineffective for delivering a synergistic effect in cumulating advantageous behaviour of branched structure, but suitable visco-elastic compromise for matching behaviour of other thermoplast e.g. in co-injection or co-extrusion.

The composition (M) preferably comprises being an amount of polymer (I-PGA) of at least 22, preferably at least 23, more preferably at least 24 and at most 38, preferably at most 37 wt %, with respect to the combined weight of polymer (b-PGA) and polymer (I-PGA).

The composition (M) possesses a visco-elastic behaviour such that the following inequality is satisfied:

$$\tan\delta_{10\ sec-1} \geq 117.51\ (\eta_{10\ sec-1})^{-0.703} + 0.200$$

where:

tan$\delta_{10}$ sec$^{-1}$ is the ratio of loss modulus (G") to storage modulus (G'), as measured according to ASTM D4440-08 at a shear rate of 10 sec$^{-1}$ and at a temperature of 260°C; and $\eta_{10}$ sec-1 is the melt viscosity, as measured according to ASTM D4440-08 at a shear rate of 10 sec$^{-1}$ and at a temperature of 260°C.

Preferably, the composition (M) possesses a visco-elastic behaviour such that the following inequality is satisfied:

$$\tan\delta_{10\ sec-1} \geq 117.51\ (\eta_{10\ sec-1})^{-0.703} + 0.250$$

where: where $\tan\delta_{10\ sec-1}$ and $\eta_{10}\ sec-1$ are as defined above.

Advantageously, hence, the composition (M) has a $\tan\delta_{10\ sec-1}$ in the domain of melt viscosities of 500 to 700 Pa x sec, when determined at according to ASTM D4440-08 at a shear rate of 10 $sec^{-1}$ and at a temperature of 260°C, of exceeding 1.5, preferably exceeding 1.6, more preferably exceeding 1.7.

The composition (M) possesses a shear thinning such that the ratio:

$$\eta_{1\ sec-1}/\eta_{100\ sec-1}$$

whereas:

- $\eta_1\ sec^{-1}$ is the melt viscosity measured according to ASTM D4440-08 at a shear rate of 1 $sec^{-1}$ and at a temperature of 260°C; and
- $\eta_{100}\ sec^{-1}$ is the melt viscosity measured according to ASTM D4440-08 at a shear rate of 100 $sec^{-1}$ and at a temperature of 260°C,

is of less than 6.0, preferably of less than 5.5. Lower boundary for the ratio:

$\eta_{1\ sec-1}/\eta_{100}\ sec^{-1}$ is not particularly limited; it is generally understood that the composition (M) will have a ratio $\eta_{1\ sec-1}/\eta_{100}\ sec^{-1}$ of at least 2.0, preferably at least 2.2.

The composition (M) may additionally comprise additional ingredients, which may be notably selected from inorganic fillers, anti-oxidants, thermal stabilizers, buffers, UV and light stabilizers, pigments, plasticizers, lubricants, processing aids. Examples of inorganic fillers include powders, whiskers and fibers of alumina, silica, silica-alumina, zirconia, titanium oxide, iron oxide, boron oxide, calcium carbonate, calciumsulfate, magnesium carbonate, magnesium silicate, magnesium phosphate, magnesium sulfate, kaolin, talc, mica, ferrite, carbon, silicon silicon nitride, molybdenum disulphide, glass, potassium titanate and the like. Examples of plasticizers include phthalates such as di(methoxyethyl) phthalate, dioctyl phthalate, diethyl phthalate and benzylbutyl phthalate; benzoates such as diethylene glycol dibenzoate and ethylene glycol dibenzoate; aliphatic dibasic esters such as dioctyl adipate and dioctyl sebacate; aliphatic tribasic acid esters such as tributyl acetylcitrate; phosphates such as dioctly phosphate and tricresyl phosphate; epoxy plasticizers such as epoxidized soybean oil; and fatty acid esters of polyalkylene glycol, such as polyethylene glycol disebacate and polypropylene glycol dilaurate.

**Method of making composition (M)**

The invention further pertains to a method of making composition (M) as above detailed, said method including mixing polymer (b-PGA) and polymer (I-PGA), and optionally additional ingredients.

According to the preferred embodiment's, the method of making composition (M) includes a step of mixing in the molten state polymer (b-PGA) and polymer (I-PGA), and optionally additional ingredients.

Mixing in the molten state can be achieved using standard melt compounding techniques, including using kneaders or melt-extruders.

According to other embodiments, when polymer (b-PGA) is manufactured by a method of polycondensation including a first step of polymerization in the molten state to form a pre-polymer and a second step of solid state polymerization (SSP) for increasing molecular weight of the pre-polymer and delivering the target polymer (b-PGA), the polymer (I-PGA) may be added via mixing in the molten state after first step is completed, so as to form a mixture of polymer (I-PGA) and a branched polyglycolic acid pre-polymer, and pursuing the solid state polymerization so as to deliver composition (M).

**Method of producing multilayer stretched product**

The invention further pertains to a method for producing a multilayer stretched product, said method comprising:

   (i) forming a multi-layer resin laminate including at least one layer of composition (M), as above detailed, and at least one layer of a thermoplast different from polyglycolic acid polymers, by processing from the melt;
   (ii) stretching the multi-layer resin laminate, so as to produce the multi-layer stretched product.

The choice of thermoplast is not particularly limited, provided that it can be laminated with a layer made of the composition (M).

Preferred examples of such thermoplast may include: polyester resins, such as polyethylene terephthalate and polyethylene naphthalate, polystyrene resins, acrylic acid or methacrylic acid resins, nylon resins, sulfide resins such as polyphenylene sulfide, and polycarbonate resins. Among these, it is preferred to use a polyester resin, particularly an aromatic polyester resin composed of a diol component and a dicarboxylic acid component, of which at least one, particularly the dicarboxylic acid component, is an aromatic one, in order to provide a multilayer product which satisfies transparency and gas-barrier property in combination depending on the use thereof. Polyethylene terephthalate (PET) is particularly preferred.

The multilayer resin laminate can be of any shape or form; it can be notably under the form of a tubular laminate, e.g. a parison, a flat laminate or a shaped container.

A preferred example of the multilayer resin laminate is a bottle pre-form, including a threaded end and a closed-ended cylindrically shaped body.

The step of forming the said resin laminate can be performed by whichever technique involving processing the composition (M) and the thermoplast, while these are in the molten state.

Suitable preferred techniques are co-extrusion molding, and co-injection molding.

According the co-extrusion molding techniques, molten flows of the composition (M) and of the thermoplast are generated in dedicated screw extruders, and fed to a multiple slot die for providing the multilayer resin laminate.

In injection molding technique, molten shots of composition (M) and of the thermoplast are injected in the same mold through a multi-shot nozzle.

In the step (ii), the multi-layer resin laminate is stretched, generally at a temperature enabling plastic deformation of the composition (M), generally beyond melting point.

According to certain embodiment's, the multi-layer resin laminate is cooled and solidified after step (i) before undergoing step (ii). In this case, step (ii) includes a step of re-heating the multi-layer laminate to a temperature which is above the glass transition temperature of the polymer (b-PGA) and of the polymer (I-PGA) of the composition (M), and above the glass transition temperature of the thermoplast, and the multi-layer laminate is stretched while heated. Stretching can be achieved by blowing a pressurized gas, typically air; the stretching step may be performed within a mould forcing the multi-layer stretched product to adhere to a well-determined geometry.

According to other embodiment's, the multi-layer resin laminate is submitted to step (ii) without any intermediary cooling and re-heating step, hence advantageously maintaining composition (M) in the molten state during step (ii).

According to certain embodiment's of this variant, an extruded multi-layer resin laminate e.g. under the form of a parison can be blown using compressed air.

According to certain embodiment's of this variant, an extruded multi-layer resin laminate e.g. under the form of a film can be stretched, e.g. mono-axially or bi-axially stretched using suitable stretching means operating in the machine and/or in the traverse directions.

According to these embodiment's, the multilayer stretched product can be notably a multilayer blown film (stretched from the molten phase without any intermediate cooling/solidification step), a multilayer cast film (generally mono-axially stretched) or a multilayer shrink film manufactured by double bubble process.

Should the disclosure of any patents, patent applications, and publications which are incorporated herein by reference conflict with the description of the present application to the extent that it may render a term unclear, the present description shall take precedence. The invention will be now be described in more detail with reference to the following examples, whose purpose is merely illustrative and not intended to limit the scope of the invention.

**Raw materials:**

I-PGA is a linear PGA commercially available under trade name KUREDUX® from Kureha produced by ring-opening polycondensation of glycolide, possessing a melt viscosity $\eta_{10\ \text{sec}^{-1}}$ of 682 Pa x sec and a $\tan\delta_{10\ \text{sec-1}}$ of 9, when measured at 260°C.

b-PGA is a branched PGA manufactured according to the teachings of US 2012027973 (SOLVAY S.A.) 02.02.2012 , obtained from a mixture of GA (3700.20 g), trimethylol propane (9.14 g, corresponding to 0.14 % moles of TMP wrt GA), tricarballylic acid (12.01 g, corresponding to 0.14 % moles of TCA wrt GA) in the presence of methanesulfonic acid (11.10 g); depending upon the SSP times, polymers with different melt viscosities were obtained.

**General description of compounding procedure**

Linear and branched polyglycolic acid were compounded using a single screw extruder Brabender (19 mm diameter, L/D 25:1) operating with the temperature profile ranging from 240 to 255°C, and recovering the mixture thereof under the form of pellets, according to the amounts specified in the table below. Temperature profile is detailed herein below:

**Table 1**

| Zone | Z1 | Z2 | Z3 | Z4 | Z5 |
|------|-----|-----|-----|-----|-----|
| T (°C) | 240 | 250 | 255 | 255 | 255 |

**Determination of melt viscosity**

Melt viscosity of samples was determined using a parallel plate rheometer according to ASTM D4440-08, at a temperature of 260°C. Melt viscosities at 1 sec$^{-1}$ and 100 sec$^{-1}$ are summarized in Table 2; values of storage modulus G' and loss modulus G", and their ratio, as well as values of melt viscosity at low and high frequency, and their ratio (also known as shear thinning) at 1 sec$^{-1}$ are summarized in Table 3. The instrument used was a 25 mm diameter parallel plate rheometer available as DHR3 from TA Instruments.

**Table 2**

| Run(#) | Polymer (b-PGA) | Polymer (l-PGA) | $\eta_{10 \text{ sec-1}}$ | $\eta_{1 \text{ sec-1}} / \eta_{100 \text{ sec-1}}$ | $\tan\delta_{10}$ sec-1 |
|--------|-----------------|-----------------|---------------|-------------------|--------------|
|        | % wt            | % wt            | (Pa x sec)    |                   |              |
| Ex. 1C | 100             | 0               | 962           | 11.0              | 0.9          |
| Ex. 2C | 100             | 0               | 801           | 8.8               | 1.1          |
| Ex. 3C | 100             | 0               | 467           | 5.3               | 1.5          |
| Ex. 4C | 100             | 0               | 161           | n.a.              | 3.3          |
| Ex. 5C | 93.75           | 6.25            | 644           | 6.6               | 1.3          |
| Ex. 6C | 87.5            | 12.5            | 606           | 5.9               | 1.4          |
| Ex. 7C | 82.25           | 18.75           | 551           | 5.0               | 1.5          |
| Ex. 8  | 75              | 25              | 561           | 4.9               | 1.7          |
| Ex. 9  | 75              | 25              | 518           | 4.3               | 1.8          |
| Ex. 10 | 62.5            | 37.5            | 505           | 2.1               | 4.0          |
| [0090] (#) values of different properties for neat b-PGA have been obtained on pellets obtained after compounding, following same procedure as used for the mixtures. |||||| 

**Table 3**

| Run | $\tan\delta_{10 \text{ sec-1}}$ | $\tan\delta_{\text{theoretical}}$(*) | $\Delta\tan\delta_{10 \text{ sec-1}}$ (#) |
|-----|--------------------|----------------------|----------------------|
| Ex. 5C | 1.3 | 1.25 | +0.1 |
| Ex. 6C | 1.4 | 1.30 | +0.1 |
| Ex. 7C | 1.5 | 1.39 | +0.1 |
| Ex. 8  | 1.7 | 1.37 | +0.3 |
| Ex. 9  | 1.8 | 1.45 | +0.3 |

(continued)

| Run | $\tan\delta_{10\ sec-1}$ | $\tan\delta_{theoretical}$(*) | $\Delta\tan\delta_{10\ sec-1}$ (#) |
|---|---|---|---|
| Ex. 10 | 4.0 | 1.48 | +2.5 |

[0092] (*) $\tan\delta_{theoretical}$ : theoretical value of $\tan\delta$ as estimated for branched PGA of the prior art according to the formula: $\tan\delta_{theoretical} = 117.51(\eta_{10\ sec-1})\ -0.703$;
(#)$\Delta\tan\delta_{10\ sec-1}$: difference between actual $\tan\delta_{10\ sec-1}$ and $\tan\delta_{theoretical}$.

**Claims**

1. A glycolic acid polymer composition [composition (M)], said composition (M) comprising:

   - at least one branched polyglycolic acid polymer [polymer (b-PGA)], said branched polyglycolic acid polymer comprising units derived from polycondensation of:

     (i) glycolic acid (GA);
     (ii) optionally, at least one hydroxyl acid having only one hydroxyl group and only one carboxylic acid group different from GA [hydroxyacid (A)], wherein the molar amount of hydroxyacid (A) is of at most 5 % moles, with respect to the sum of moles of GA and hydroxyacid (A);
     (iii) at least one polyol comprising at least three hydroxyl groups and being free from carboxylic acid group [polyol (H)], wherein the amount of polyol (H) is such that the number of hydroxyl groups thereof is comprised between 0.050 to 0.750 % with respect to the overall number of hydroxyl groups of glycolic acid and of the hydroxyacid (A), if present;
     (iv) at least one polyacid comprising at least two carboxylic acid groups and being free from hydroxyl groups [polyacid (O)], wherein the amount of polyacid (O) is such that the number of carboxyl groups thereof is comprised between 0.050 to 0.750 % with respect to the overall number of hydroxyl groups of glycolic acid and of the hydroxyacid (A), if present; and
     (v) optionally, at least one carboxylic acid having one carboxylic acid group and being free from hydroxyl group [monoacid (C)], wherein the amount of said acid (C) is such that the number of carboxylic acid groups thereof is of less than 0.010 % with respect to the overall number of hydroxyl groups of glycolic acid and of the hydroxyacid (A), if present; and

   - at least one linear polyglycolic acid polymer [polymer (I-PGA)], said linear polyglycolic acid polymer consisting essentially of recurring units derived from ring-opening-polymerization of glycolide, said polymer (I-PGA) being present in the composition (M) in an amount of at least 20 and at most 40 wt %, with respect to the combined weight of polymer (b-PGA) and polymer (I-PGA).

2. The composition (M) of Claim 1, wherein polymer (b-PGA) comprises units derived from polycondensation of a hydroxyacid (A) which is selected from the group consisting of lactic acid, 3-hydroxybutyric acid, 4-hydroxybutyric acid, 4-hydroxyvaleric acid, 5-hydroxyvaleric acid, and 6-hydroxycaproic acid.

3. The composition (M) of claim 1 or 2, wherein in polymer (b-PGA) the polyol (H) is selected from the group consisting of:

   - triols, in particularly selected from the group consisting of glycerol, trimethylolpropane, trimethylolbutane, 2,3-di(2'-hydroxyethyl)-cyclohexan-1-ol, hexane-1,2,6-triol, 1,1,1-tris(hydroxymethyl)ethane, 3-(2'-hydroxyethoxy)propane-1,2-diol, 3-(2'-hydroxypropoxy)-propane-1,2-diol, 2-(2'-hydroxyethoxy)-hexane-1,2-diol, 6-(2'hydroxypropoxy)-hexane-1,2-diol, 1,1,1-tris-[(2'-hydroxyethoxy)-methylethane, 1,1,1-tris-[(2'-hydroxypropoxy)-methyl-propane, 1,1,1-tris-(4'-hydroxyphenyl)ethane, 1,1,1-tris-(hydroxyphenyl)-propane, 1,1,5-tris-(hydroxyphenyl)-3-methylpentane, trimethylolpropane ethoxylate, trimethylolpropane propoxylate, tris(hydroxymethyl)aminomethane;
   - tetraols, in particularly selected from the group consisting of diglycerol, di(trimethylolpropane), pentaerythritol, 1,1,4-tris-(dihydroxyphenyl)-butane;
   - polyols comprising 5 hydroxyl groups, in particular triglycerol;
   - polyols comprising 6 hydroxyl groups, in particular dipentaerythritol; and
   - polyols comprising 8 hydroxyl groups, in particular tripentaerythritol.

4. The composition (M) of anyone of the preceding claims, wherein in polymer (b-PGA) the polyacid (O) is selected among polycarboxylic aliphatic acids, polycarboxylic cycloaliphatic acids and polycarboxylic aromatic acids.

5. The composition (M) of anyone of the preceding claims, wherein in polymer (b-PGA) the polyacid (O) is selected from the group consisting of:

- polycarboxylic aliphatic acids comprising three or more than three carboxylic acid groups, such as:
- propane1,2,3-tricarboxylic acid (also known as tricarballylic acid);
- ethane-1,1,2,2 tetracarboxylic acid;
- butane-1,2,3,4 tetracarboxylic acid;
- pentane-1,2,4,5-tetracarboxylic acid;
- polycarboxylic cycloaliphatic acids comprising three or more than three carboxylic acid groups, such as:
- 1,2,3,4-cyclobutane tetracarboxylic acid;
- 2,2,6,6-tetra-(carboxyethyl)cyclohexanone;
- (+)-(18-crown-6)-2,3,11,12-tetracarboxylic acid;
- cyclopentane-1,2,3,4 tetracarboxylic acid;
- cyclohexane-1,2,4,5 tetracarboxylic acid;
- cyclohexane -2,3,5,6 tetracarboxylic acid;
- 3-ethylcyclohexane-1,2,4,5 tetracarboxylic acid;
- 1-methyl-3-ethyl cyclohexane-3-(1,2)5,6 tetracarboxylic acid;
- 1-ethyl cyclohexane-1-(1,2),3,4 tetracarboxylic acid;
- 1-propylcyclohexane-1-(2,3),3,4 tetracarboxylic acid;
- 1,3-dipropylcyclohexane-1-(2,3),3-(2,3) tetracarboxylic acid;
- dicyclohexyl-3,4,3',4' tetracarboxylic acid; and
- polycarboxylic aromatic acids comprising three or more than three carboxylic acid groups, such as:

  - pyromellitic acid (1,2,4,5- benzene tetracarboxylic acid);
  - trimesic acid (1,3,5-benzene tricarboxylic acid);
  - trimellitic acid (1,3,4-benzene tricarboxylic acid);
  - benzophenone-3,3',4,4'-tetracarboxylic acid;
  - tetrahydrofuran-2,3,4,5-tetracarboxylic acid;
  - 4,4'-(hexafluoroisopropylidene)diphthalic acid;
  - 4,4'-oxydiphthalic acid anhydride;
  - 4,4'-(4,4'-isopropylidenediphenoxy)bis(phthalic acid);
  - 3,3',4,4'-biphenyl tetracarboxylic acid;
  - 2,3,3',4'-biphenyl tetracarboxylic acid;
  - 2,2',3,3'-biphenyl tetracarboxylic acid;
  - 1,2,5,6-naphthalene tetracarboxylic acid;
  - 2,3,6,7-naphthalene tetracarboxylic acid;
  - perylene-3,4,9,10 tetracarboxylic acid;
  - propane 2,2-bis(3,4-dicarboxyphenyl) acid;
  - ethane 1,1-bis(2,3-dicarboxyphenyl) acid;
  - ethane 1,1-bis(3,4-dicarboxyphenyl) acid;
  - phenanthrene-1,8,9,10-tetracarboxylic acid;
  - tetrahydrofuran-2,3,4,5-tetracarboxylic acid;
  - 3,3',4,4'-benzophenone tetracarboxylique acid;
  - 2,2',3,3'-benzophenone tetracarboxylic acid;
  - 2,3,5,6-pyridine tetracarboxylic acid;
  - 3,3',4,4'-tetraphenylsilane tetracarboxylic acid;
  - 2,2'-bis-(3,4-bicarboxyphenyl) hexafluoropropane tetracarboxylic acid;
  - 2,2-bis(3,4-dicarboxyphenyl) sulfonic acid;
  - 4,4'-(hexafluoroisopropylidene) diphthalic acid;
  - 3,3',4,4'-diphenylsulfone tetracarboxylic acid;
  - ethyleneglycol bistrimellitic acid;
  - hydroquinone diphthalique acid;
  - pyrazine-2,3,5,6-tetracarboxylic acid;
  - thiophene-2,3,4,5-tetracarboxylic acid.

6. The composition (M) according to anyone of the preceding claims, wherein in polymer (b-PGA), use is made of a monoacid (C) selected from the group consisting of caprylic acid $[CH_3(CH_2)_6COOH]$, capric acid $[CH_3(CH_2)_8COOH]$, undecanoic acid $[H_3C-(CH_2)_9-COOH]$, dodecanoic or lauric acid $[H_3C-(CH_2)_{10}-COOH]$, tridecanoic acid $[H_3C-(CH_2)_{11}-COOH]$, tetradecanoic or myristic acid $[H_3C-(CH_2)_{12}-COOH]$, pentadecanoic acid $[H_3C-(CH_2)_{13}-COOH]$, hexadecanoic or palmitic acid $[H_3C-(CH_2)_{14}-COOH]$, octadecanoic or stearic acid $[H_3C-(CH_2)_{16}-COOH]$, arachidic acid $[H_3C-(CH_2)_{18}-COOH]$, and behenic acid $[H_3C-(CH_2)_{20}-COOH]$.

7. The composition (M) according to anyone of the preceding claims, wherein the polymer (b-PGA) possesses a melt viscosity ranging from 400 to 800 Pa x sec, when measured according to ASTM D4440-08 at a shear rate of 10 $sec^{-1}$ and at a temperature of 260°C.

8. The composition (M) according to anyone of the preceding claims, such composition (M) possessing a visco-elastic behaviour such that $tan\delta_{10}\ sec^{-1}$ is of at least 1.5 when the $\eta_{10}\ sec^{-1}$ is of between 500 to 700 Pa x sec, wherein $tan\delta_{10}\ sec^{-1}$ is the ratio of loss modulus (G") to storage modulus (G'), as measured according to ASTM D4440-08 at a shear rate of 10 $sec^{-1}$ and at a temperature of 260°C; and $\eta_{10}\ sec^{-1}$ is the melt viscosity, as measured according to ASTM D4440-08 at a shear rate of 10 $sec^{-1}$ and at a temperature of 260°C and/or wherein the composition (M) possesses a shear thinning such that the ratio:

$$\eta_{1\ sec-1}/\eta_{100\ sec-1}$$

whereas:

- $\eta_{1\ sec-1}$ is the melt viscosity measured according to ASTM D4440-08 at a shear rate of 1 $sec^{-1}$ and at a temperature of 260°C; and
- $\eta_{100\ sec-1}$ is the melt viscosity measured according to ASTM D4440-08 at a shear rate of 100 $sec^{-1}$ and at a temperature of 260°C,

is of less than 6.0, preferably of less than 5.5.

9. A method of making composition (M) according to anyone of claims 1 to 8, said method including mixing polymer (b-PGA) and polymer (I-PGA), and optionally additional ingredients.

10. The method of Claim 9, said method including a step of mixing in the molten state polymer (b-PGA) and polymer (I-PGA), and optionally additional ingredients.

11. The method of Claim 9, wherein polymer (b-PGA) is manufactured by a method of polycondensation including a first step of polymerization in the molten state to form a pre-polymer and a second step of solid state polymerization (SSP) for increasing molecular weight of the pre-polymer and delivering the target polymer (b-PGA), and wherein the polymer (I-PGA) is added via mixing in the molten state after said first step of polymerization is completed, so as to form a mixture of polymer (I-PGA) and a branched polyglycolic acid pre-polymer, and pursuing the solid state polymerization so as to deliver composition (M).

12. A method for producing a multilayer stretched product, said method comprising:

(i) forming a multi-layer resin laminate including at least one layer of composition (M), according to anyone of claims 1 to 8, and at least one layer of a thermoplast different from polyglycolic acid polymers, by processing from the melt;
(ii) stretching the multi-layer resin laminate, so as to produce the multi-layer stretched product.

13. The method of Claim 12, wherein the thermoplast is selected from the group consisting of polyester resins, such as polyethylene terephthalate and polyethylene naphthalate, polystyrene resins, acrylic acid or methacrylic acid resins, nylon resins, sulfide resins such as polyphenylene sulfide, and polycarbonate resins.

14. The method of Claim 13, wherein the step of forming the said multi-layer resin laminate is performed by co-extrusion molding or co-injection molding.

**15.** The method of Claim 13 or 14, wherein the multi-layer resin laminate is cooled and solidified after step (i) before undergoing step (ii).

Fig. 1

Europäisches
Patentamt

European
Patent Office

Office européen
des brevets

# EUROPEAN SEARCH REPORT

Application Number

EP 16 20 6074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/142153 A1 (NOVARTIS AG [CH]; LAMBERT OLIVIER [FR]; RIEMENSCHNITTER MARC [DE]; VUC) 27 November 2008 (2008-11-27) * table 1 * | 1-15 | INV. C08L67/04 |

-----

|   |   |
|---|---|
|   | TECHNICAL FIELDS SEARCHED (IPC) |
|   | C08L |

The present search report has been drawn up for all claims

| Place of search | Date of completion of the search | Examiner |
|---|---|---|
| The Hague | 23 May 2017 | Scheunemann, Sven |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)

# EP 3 339 372 A1

## ANNEX TO THE EUROPEAN SEARCH REPORT
## ON EUROPEAN PATENT APPLICATION NO.

EP 16 20 6074

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2017

| Patent document cited in search report | Publication date | Patent family member(s) | Publication date |
|---|---|---|---|
| WO 2008142153 A1 | 27-11-2008 | AR 066677 A1 | 02-09-2009 |
| | | AU 2008252931 A1 | 27-11-2008 |
| | | BR PI0811904 A2 | 18-11-2014 |
| | | CA 2683935 A1 | 27-11-2008 |
| | | CN 101677965 A | 24-03-2010 |
| | | CO 6241097 A2 | 20-01-2011 |
| | | CR 11078 A | 04-12-2009 |
| | | CU 20090200 A7 | 21-09-2011 |
| | | DO P2009000262 A | 15-10-2010 |
| | | EA 200901523 A1 | 30-04-2010 |
| | | EC SP099793 A | 29-01-2010 |
| | | EP 2164473 A1 | 24-03-2010 |
| | | GE P20125582 B | 25-07-2012 |
| | | GT 200900302 A | 01-07-2011 |
| | | HN 2009003296 A | 10-02-2014 |
| | | JP 5507447 B2 | 28-05-2014 |
| | | JP 2010527971 A | 19-08-2010 |
| | | KR 20100017904 A | 16-02-2010 |
| | | KR 20160002937 A | 08-01-2016 |
| | | MA 31445 B1 | 01-06-2010 |
| | | MY 148915 A | 14-06-2013 |
| | | NZ 580589 A | 22-12-2011 |
| | | PA 8781501 A1 | 18-12-2008 |
| | | PE 03872009 A1 | 28-04-2009 |
| | | SM AP200900099 A | 19-01-2010 |
| | | SV 2009003421 A | 21-05-2010 |
| | | TN 2009000447 A1 | 31-03-2011 |
| | | TW 200906437 A | 16-02-2009 |
| | | UA 97396 C2 | 10-02-2012 |
| | | US 2010178344 A1 | 15-07-2010 |
| | | US 2013129798 A1 | 23-05-2013 |
| | | UY 31103 A1 | 05-01-2009 |
| | | WO 2008142153 A1 | 27-11-2008 |
| | | ZA 200907168 B | 28-07-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6673403 B
- US 7998385 B
- US 2012027973 A
- WO 2016173640 A